# EUROPÄISCHE PATENTSCHRIFT

(11) **EP 2 899 442 B1**
(45) Veröffentlichungstag und Bekanntmachung des Hinweises auf die Patenterteilung: **01.07.2020**
(21) Anmeldenummer: 14188416.3
(22) Anmeldetag: 10.10.2014
(51) Int. Cl.: F16L 25/00, F16L 33/04

(54) **Vorrichtung zur Vorpositionierung einer Schlauchschelle auf einem Faltenschlauch**
Device for prepositioning a hose clip on a corrugated hose
Dispositif de pré-positionnement d'un collier de serrage sur un tube à soufflets

(30) Priorität: 16.12.2013 DE 102013226001
(43) Veröffentlichungstag der Anmeldung: 29.07.2015
(73) Patentinhaber: ContiTech MGW GmbH, 34346 Hannoversch-Münden (DE)
(72) Erfinder: Brill, Hartmut, 37242 Bad Sooden-Allendorf (DE); Jünemann, Jens, 37191 Katlenburg-Lindau (DE); Röhrig, Sven, 37308 Heiligenstadt (DE)
(74) Vertreter: Finger, Karsten

(56) Entgegenhaltungen:
- DE-A1- 2 721 090
- DE-A1- 3 524 074
- GB-A- 2 065 823
- US-A- 3 144 262
- US-A1- 2005 161 947
- US-A1- 2009 295 153

## Beschreibung

Die Erfindung betrifft eine Schlauchanordnung, mit einem Faltenschlauch, einer Schlauchschelle, und einer Vorrichtung zur Vorpositionierung der Schlauchschelle auf dem Faltenschlauch gemäß dem Oberbegriff des Anspruchs 1.

Es sind seit langem Montagehilfen bekannt, um eine Schlauchschelle im Anschlussbereich eines Schlauches verliersicher derart zu positionieren und zu fixieren, dass sie nach dem Aufstecken des Schlauches auf einen Stutzen oder dergleichen bereits in der richtigen Position vorhanden ist und nur noch gespannt werden muss, um eine sichere und druckdichte Verbindung zwischen Schlauch und Stutzen herzustellen.

Als derartige Montagehilfen sind z.B. aus Elastomermaterial auf den Schlauch im Anschlussbereich aufgespritzte Erhebungen z.B. in Form von Haken oder Pilzen bekannt, die in korrespondierende Aussparungen des Schellenbandes eingreifen. Hierdurch kann gleichzeitig sowohl eine Sicherung des Schellenbandes in axialer sowie in Umfangsrichtung gegen Verschieben und Verrutschen des Schlauches als auch eine Sicherung in radialer Richtung gegen Abheben und Lösen des Schellenbandes von der Schlauchoberfläche erreicht werden.

Ferner sind käfigartige Ummantelungen aus Kunststoff oder Metall bekannt, um die Schlauchschelle bei der Montage auf dem Schlauch an der gewünschten Position zu halten. Die DE 10 2006 057 497 A1 betrifft ein System zur Vorpositionierung einer Schlauchschelle auf einem Schlauchende. Das System weist mehrere einzelne Fixierteile auf, die jeweils mit einem ersten U-förmigen Element in Längsrichtung auf den Rand des Schlauches aufgesteckt sind und in einem zweiten U-förmigen Element das Schellenband aufnehmen, um dieses am Rand des Schlauchendes zu positionieren und zu halten.

Zu den Schläuchen gehören auch die Faltenschläuche, welche in Umfangsrichtung verlaufende und in Längsrichtung beabstandete Einschnürungen mit dazwischenliegenden Falten aufweisen, so dass sich eine in Längsrichtung gewellte Oberfläche ergibt. Diese Einschnürungen ermöglichen es, Faltenschläuche zu biegen, ohne dass es hierdurch zum Einknicken des Schlauchquerschnittes kommt. Dabei schieben sich die Falten, d.h. die Abschnitte zwischen den Einschnürungen, auf der Innenseite der Biegung zusammen und die radial gegenüberliegenden Falten weiten sich, so dass es zwar zu einer geringfügigen aber gleichmäßigen und knickfreien Querschnittsverringerung im Bereich der Biegung kommt.

Um die Biegesteifigkeit, den Berstdruck und die Aufweitung von Faltenschläuchen zu erhöhen, ist es bekannt, Metall- oder Kunststoffringe als sog. Druckringe in die Einschnürungen einzubringen, um diese zu verstärken. Hierdurch entstehen jedoch zusätzlich Kosten durch Material und Montageaufwand.

Eine Aufgabe der vorliegenden Erfindung ist es, die Herstellung und bzw. oder Montage von Faltenschläuchen mit Schellen zu vereinfachen. Insbesondere sollen bei der Herstellung und bzw. oder Montage von Faltenschläuchen mit Druckringen mit Schellen die Herstellungs- und bzw. oder Montageschritte reduziert werden.

Die Aufgabe wird erfindungsgemäß durch eine Schlauchanordnung gemäß Anspruch 1 gelöst. Vorteilhafte Weiterbildungen sind in den Unteransprüchen beschrieben.

Hierbei liegt der Erfindung die Erkenntnis zugrunde, diese Vorrichtung nicht nur zur Vorpositionierung der Schlauchschelle sondern gleichzeitig auch als ersten integrierten Druckring zu verwenden. Auf diese Weise kann der Montageaufwand zur Aufbringung dieses Druckringes sowie der Druckring selbst eingespart werden. Ferner wird die Biegsamkeit des Faltenschlauches bis zu dem Bereich des ersten Kontaktelementes verhindert bzw. reduziert, so dass kleinere Biegeradien des Faltenschlauches erreicht werden. Des Weiteren wird die Schallabsorption verringert, ohne dass hierzu separate Maßnahmen und Elemente erforderlich sind. Auch wird die Radialsteifigkeit des Faltenschlauches durch das Kontaktelement verbessert.

Hierzu weist die Vorrichtung zur Vorpositionierung ein erstes Kontaktelement auf, welches ausgebildet ist, in eine erste Einschnürung des Faltenschlauches einzugreifen und bzw. oder auf eine erste Falte des Faltenschlauches aufzugreifen. Unter einem Kontaktelement bzw. integrierten Druckring kann sowohl ein in Umfangsrichtung geschlossenes Element verstanden werden, welches nach der Montage in einer Einschnürung des Faltenschlauches liegt oder auf einer Falte des Faltenschlauches sitzt. Es kann auch ein Element vorgesehen werden, welches beide Funktionen ausübt. Ein derartiges Element kann zwischen Einschnürung und Falte mit der Oberfläche des Faltenschlauches durchgängig in Kontakt stehen oder auch einen Abstand aufweisen.

In jedem Fall wird durch den Kontakt des ersten Kontaktelements bzw. des integrierten Druckrings mit der Oberfläche des Faltenschlauches eine derart kraftschlüssige Verbindung durch Haftreibung hergestellt, dass ein Verdrehen der Vorrichtung zur Vorpositionierung gegenüber dem Faltenschlauch um die Längsachse sicher verhindert wird. Gleichzeitig erfolgt eine sichere Positionierung der Vorrichtung zur Vorpositionierung in Längsrichtung durch die formschlüssige Wechselwirkung zwischen Einschnürung bzw. Falte des Faltenschlauches und Kontaktelement der Vorrichtung zur Vorpositionierung. Hierdurch kann auf Erhebungen im Anschlussbereich des Faltenschlauches für korrespondierende Aussparungen des Schlauchschellenbandes verzichtet werden.

Vorteilhaft ist hierbei auch, dass durch radiales Eindrücken des Faltenschlauches dessen Querschnitt derart verringert werden kann, dass die kraftschlüssige Verbindung zum ersten Kontaktelement zumindest soweit wieder aufgehoben werden kann, dass auch nach der Montage der Vorrichtung zur Vorpositionierung auf dem Faltenschlauch deren Position in Umfangsrichtung überhaupt und insbesondere sehr einfach und schnell verändert werden kann, falls dies erforderlich ist.

Weist der Faltenschlauch in seinen Einschnürungen bzw. auf seinen Falten radiale Erhebungen und bzw. oder Vertiefungen auf, so kann das Kontaktelement entsprechend gestaltet werden, um auf diese aufzugreifen bzw. in diese einzugreifen und auf diese Weise in Umfangsrichtung eine zusätzliche oder alternative Formschlüssigkeit gegen Verdrehung zu erreichen.

Gemäß einem Aspekt der Erfindung weist die Vorrichtung zur Vorpositionierung ferner ein zweites Kontaktelement auf, welches sich von dem ersten Kontaktelement erstreckt und welches ausgebildet ist, in eine zweite Einschnürung des Faltenschlauches einzugreifen und bzw. oder auf eine zweite Falte des Faltenschlauches aufzugreifen. Auf diese Weise können zwei oder auch noch mehr Kontaktelemente hintereinander angeordnet werden, um noch mehr separate Druckringe einzusparen. Ferner kann hierdurch die Biegsamkeit und das akustische Verhalten des Faltenschlauches weiter beeinflusst werden.

Gemäß der Erfindung weist die Vorrichtung zur Vorpositionierung ein Gehäuse auf, welches einen Anschlussbereich des Faltenschlauchs in Umfangsrichtung zumindest abschnittsweise, vorzugsweise vollständig, umgibt und von dem sich das erste Kontaktelement in Längsrichtung von dem Anschlussbereich weg erstreckt. Unter Anschlussbereich wird der Bereich eines Schlauchendes verstanden, welcher zur Verbindung mit einem Gegenstück wie z.B. zum Aufstecken auf einen Stutzen ausgebildet ist. Dieser Anschlussbereich ist bei einem Faltenschlauch faltenfrei ausgebildet und weist vorzugsweise im Inneren eine rippenförmige Kontur zur Erhöhung der Haftreibung in Längsrichtung auf, welche auch dichtend wirken können. Ferner kann eine Aufnahme für ein Dichtelement vorgesehen sein. Dem Schlauchende abgewandt schließt sich an den Anschlussbereich der mit Einschnürungen und Falten versehene Bereich des Faltenschlauches an. Daher erstreckt sich das erste Kontaktelement von dem Gehäuse über den Anschlussbereich hinweg, um dort in eine Einschnürung eingreifen bzw. auf eine Falte aufgreifen zu können. Dabei kann das erste Kontaktelement in die erste Einschnürung, die sich dem Anschlussbereich anschließt, eingreifen oder auch diese und weitere Einschnürungen überspringen, um in eine weiter vom Anschlussbereich beabstandete Einschnürung einzugreifen. Hierdurch können mit der Ausbildung eines einzigen Kontaktelementes mehrere Druckringe ersetzt, ein größerer Bereich hinsichtlich seiner Biegesteifigkeit und Schallabsorption reduziert sowie in der Radialsteifigkeit erhöht werden.

Vorteilhaft ist auch, dass durch ein in Umfangsrichtung des Anschlussbereichs vollständig umgebendes Gehäuse die Montage des Faltenschlauches auf einem Stutzen vereinfacht und erleichtert werden kann. So werden Faltenschläuche bei der Montage auf einem Schlauchstutzen üblicherweise durch die händische Aufschiebehaltung meist in ovale Form gebracht. Das wiederum führt zur Erschwerung der Schlauchmontage. Wird jedoch das Schlauchende bei der Montage vom Gehäuse vollständig umfasst, bleibt der Schlauch bei der Montage rund. Dadurch ist eine bessere Schlauchmontage möglich.

Gemäß der Erfindung weist das Gehäuse eine Offnung zur Aufnahme eines Spannmechanismus der Schlauchschelle auf. Hierdurch wird der Zugang zum Spannmechanismus sichergestellt, wenn das Schlauchschellenband ansonsten nach außen durch die Vorrichtung zur Vorpositionierung soweit verdeckt wird, dass ein Zugang zum Spannmechanismus nicht möglich ist.

Gemäß einem weiteren Aspekt der Erfindung weist das Gehäuse eine in Umfangsrichtung verlaufende Aufnahme eines Schellenbands der Schlauchschelle auf. Auf diese Weise kann das Schellenband zuerst in der Vorrichtung zur Vorpositionierung aufgenommen und dann können beide zusammen auf dem Aufnahmebereich des Faltenschlauches montiert werden, so dass die Schlauchschelle richtig positioniert und dort sicher gehalten werden kann.

Gemäß einem weiteren Aspekt der Erfindung weist das Gehäuse eine Mehrzahl von radialen Durchgängen auf. Hierdurch kann Material eingespart und das Gewicht der Vorrichtung zur Vorpositionierung reduziert werden.

Gemäß einem weiteren Aspekt der Erfindung weist das Gehäuse eine Aussparung, welche vorzugsweise der Öffnung im Wesentlichen gegenüberliegend angeordnet ist, und bzw. oder eine strukturierte äußere Oberfläche auf. Die Aussparung dient als Sicht- bzw. Kontrollfenster, um den korrekten Sitz der Schelle bzw. deren Schellenbandes innerhalb des Gehäuses optisch erfassen zu können. Hierzu ist dieses Sichtfenster vorzugsweise der Öffnung für den Spannmechanismus gegenüberliegend angeordnet, da auch diese Öffnung zu diesem Zweck dient und auf diese Weise beide Sichtfenster gleichmäßig über den Umfang des Gehäuses verteilt sind und so die Lage des Schlauchschellenbandes bestmöglich mit zwei Sichtfenstern kontrolliert werden kann.

Eine strukturierte äußere Oberfläche des Gehäuses vorzusehen ist deshalb von Vorteil, weil hierdurch die Rauigkeit bzw. der Gripp der Oberfläche und damit die Handhabung der Vorrichtung zur Vorpositionierung bzw. der Schlauchanordnung verbessert werden kann. Dies kann durch Rillen in Umfangsrichtung und damit senkrecht zur Montagerichtung oder auch gekreuzte Rillen oder dergleichen erfolgen.

Die Erfindung betrifft eine Schlauchanordnung mit einem Faltenschlauch, einer Schlauchschelle und einer Vorrichtung zur Vorpositionierung der Schlauchschelle auf dem Faltenschlauch wie zuvor beschrieben. Die Montage dieser Anordnung kann durch die erfindungsgemäße Vorrichtung zur Vorpositionierung vereinfacht werden, wie zuvor erläutert. Durch den Kontakt des ersten Kontaktelements mit dem Faltenschlauch wird auch die Verliersicherheit dieser Vorrichtung und damit auch der vorpositionierten Schlauchschelle erreicht.

Gemäß einem Aspekt der Erfindung weist der Faltenschlauch eine in Umfangsrichtung verlaufende Aufnahme eines Schellenbands der Schlauchschelle auf. Hierdurch kann die Schlauchschelle zuerst auf dem Faltenschlauch in dessen Aufnahmebereich positioniert und gegen Verlieren und Verrutschen von außen durch die Vorrichtung zur Vorpositionierung gesichert werden.

Gemäß einem weiteren Aspekt der Erfindung weist der Faltenschlauch wenigstens eine weitere Einschnürung mit einem Druckring auf. Auf diese Weise wird die Biegsamkeit des Faltenschlauches durch die Ausbildung von Falten und Einschnürungen erreicht, auch wenn wenigstens ein Anschlussbereich des Faltenschlauches eine reduzierte Biegsamkeit aufweist.

Ausführungsbeispiele und weitere Vorteile der Erfindung werden nachstehend im Zusammenhang mit den folgenden Figuren erläutert. Darin zeigt:
- Fig. 1: eine perspektivische schematische Darstellung eines Faltenschlauches mit erfindungsgemäßer Vorrichtung zur Vorpositionierung einer Schlauchschelle gemäß einem ersten Ausführungsbeispiel;
- Fig. 2: eine Detailansicht der Fig. 1 gemäß dem ersten Ausführungsbeispiel;
- Fig. 3: eine Detailansicht der Fig. 2 gemäß dem ersten Ausführungsbeispiel;
- Fig. 4: eine Detailansicht der Fig. 2 gemäß einem zweiten Ausführungsbeispiel;
- Fig. 5: eine Detailansicht der Fig. 1 gemäß einem dritten Ausführungsbeispiel;
- Fig. 6: eine schematische Schnittdarstellung eines Faltenschlauches mit erfindungsgemäßer Vorrichtung zur Vorpositionierung einer Schlauchschelle gemäß einem vierten Ausführungsbeispiel;
- Fig. 7a: eine perspektivische schematische Darstellung eines Gehäuses der Fig. 1 gemäß einem fünften Ausführungsbeispiel; und
- Fig. 7b: eine perspektivische schematische Darstellung eines Gehäuses der Fig. 1 gemäß einem sechsten Ausführungsbeispiel.

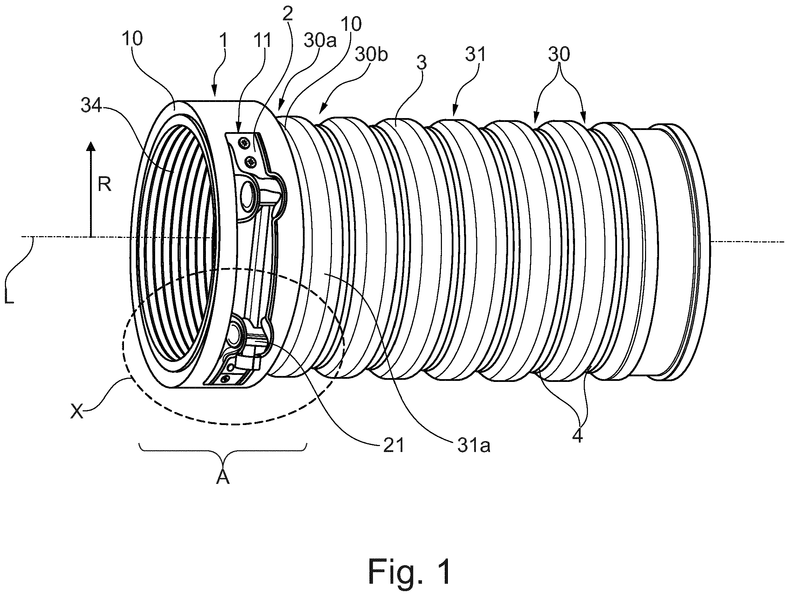

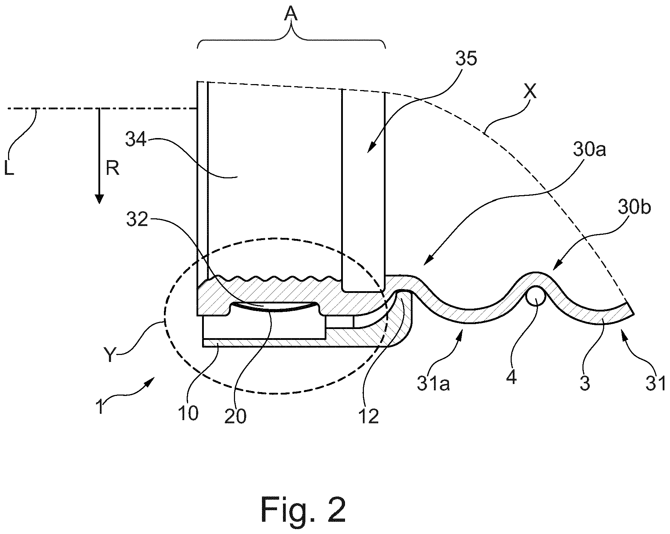

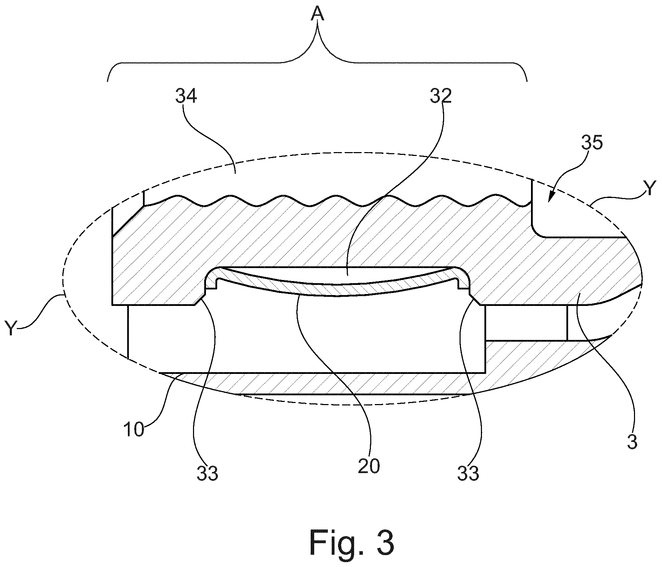

Fig. 1 zeigt eine perspektivische schematische Darstellung eines Faltenschlauches 3 mit erfindungsgemäßer Vorrichtung zur Vorpositionierung 1 einer Schlauchschelle 2 gemäß einem ersten Ausführungsbeispiel. Fig. 2 zeigt eine Detailansicht X der Fig. 1 gemäß dem ersten Ausführungsbeispiel. Fig. 3 zeigt eine Y Detailansicht der Fig. 2 gemäß dem ersten Ausführungsbeispiel.

Der Faltenschlauch 3 weist an seinem dargestellten Ende einen Anschlussbereich A auf, der im Wesentlichen zylindrisch ausgebildet ist und im Inneren eine Aufnahme 34 zur Verbindung mit einem Stutzen (nicht dargestellt) aufweist. Diese Stutzenaufnahme 34 weist eine rippenförmige Kontur auf, um die Haftreibung in Richtung der Längsachse L zu verbessern. An die Stutzenaufnahme 34 schließt sich eine Aufnahme 35 für ein Dichtelement wie z.B. einen O-Ring oder dergleichen an.

An der Außenseite des Faltenschlauches 3 schließen sich an den Anschlussbereich A eine Vielzahl von Einschnürungen 30 und zwischen diesen liegende Falten 31 an, die für die Biegsamkeit des Faltenschlauches 3 sorgen und diesem seinen Namen geben. In diesem Ausführungsbeispiel weisen dabei die zweite Einschnürung 30b und alle weiteren, von dieser jenseits des Anschlussbereiches A angeordneten Einschnürungen 30 jeweils einen Druckring 4 auf, die u.a. den Berstdruck des Faltenschlauches 3 erhöhen.

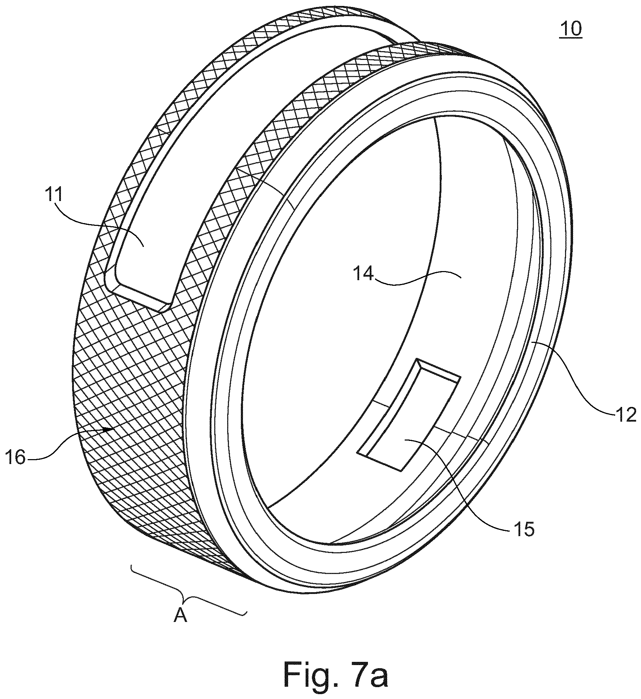

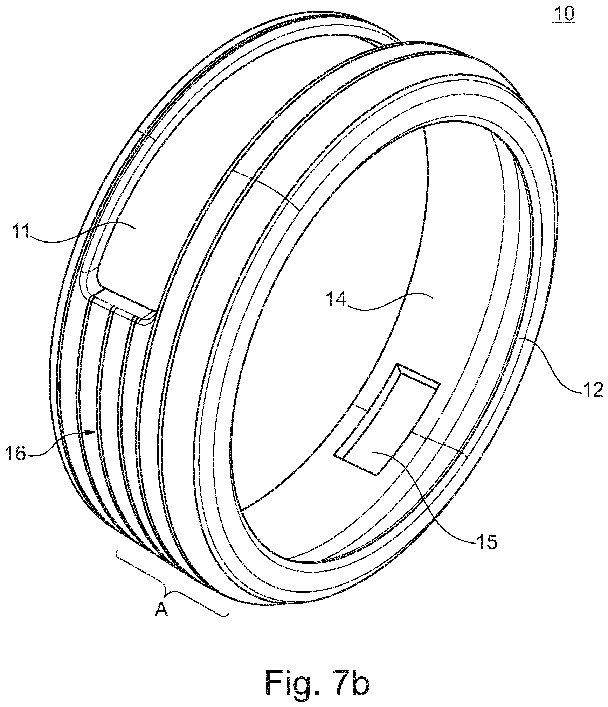

Im Anschlussbereich A weist der Faltenschlauch 3 eine Vorrichtung zur Vorpositionierung 1 einer Schlauchschelle 2 mit einem Gehäuse 10 auf. Ein Schellenband 20 der Schlauchschelle 2 wird in diesem Ausführungsbeispiel in einer korrespondierenden Aussparung 32 des Faltenschlauches 3 zwischen Rändern 33 geführt und gehalten. Ein Spannmechanismus 21 ist durch eine entsprechende Öffnung 11 des Gehäuses 10 von außen zugänglich (vgl. auch Fig. 7a und 7b).

Von dem Gehäuse 10, welches in Richtung der Längsachse L etwa der Breite des Anschlussbereiches A entspricht, erstreckt sich vom Ende des Faltenschlauches 3 weg in diesem Ausführungsbeispiel ein erstes Kontaktelement 12, welches in die erste Einschnürung 30a des Faltenschlauches 3 eingreift. Hierdurch wird der dort sonst vorzusehende Druckring 4 durch das erste Kontaktelement 12 ersetzt, so dass auf diesen verzichtet werden kann. Durch die Haftreibung zwischen den Oberflächen des Faltenschlauches im Bereich der ersten Einschnürung 30a und des ersten Kontaktelements 12 wird ein Verdrehen oder Verrutschen der Vorrichtung zur Vorpositionierung 1 in Umfangsrichtung sicher verhindert. Gleichzeitig wird die Positionierung und Verliersicherheit der Schlauchschelle 2 sowie der Vorrichtung zur Vorpositionierung 1 durch den formschlüssigen Eingriff des ersten Kontaktelements 12 in die erste Einschnürung 30a gewährleistet.

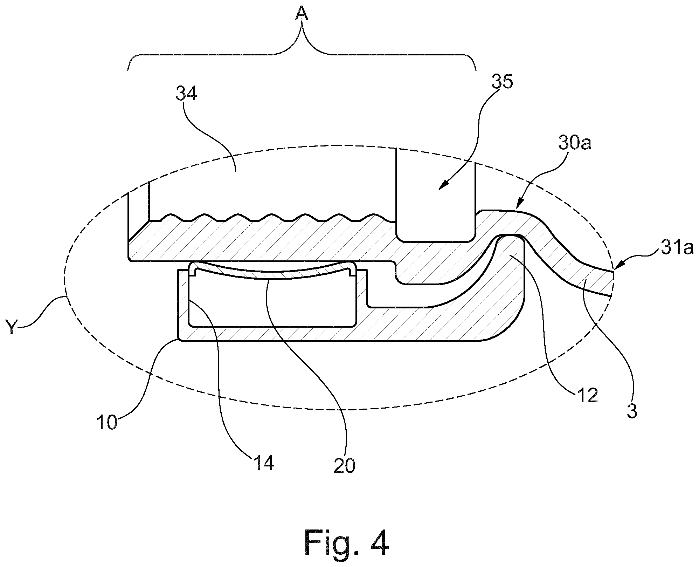

Fig. 4 zeigt eine Detailansicht Y der Fig. 2 gemäß einem zweiten Ausführungsbeispiel. In diesem Fall wird das Schellenband 20 der Schlauchschelle 2 in einer korrespondierenden Aussparung 14 des Gehäuses 10 geführt und gehalten.

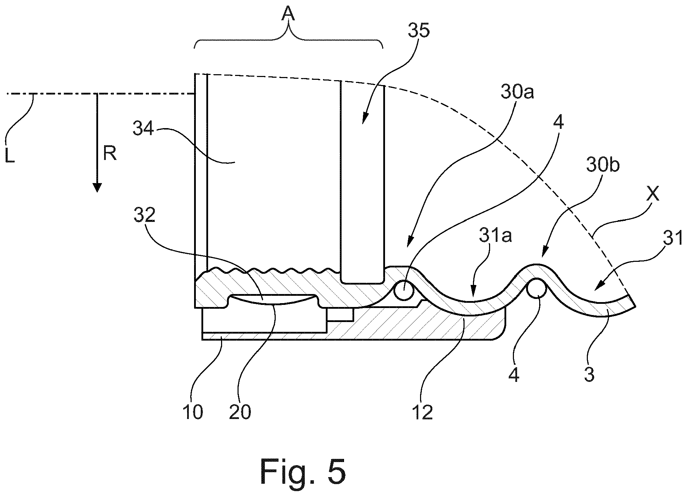

Fig. 5 zeigt eine Detailansicht X der Fig. 1 gemäß einem dritten Ausführungsbeispiel. Hier greift das erste Kontaktelement 12 auf die erste Falte 31a des Faltenschlauches 3 auf, die zwischen der ersten und zweiten Einschnürung 30a, 30b ausgebildet wird. Zur Sicherstellung der Formschlüssigkeit in Richtung der Längsachse L weist das erste Kontaktelement 12 eine halbschalenförmige Kontur auf seiner Innenseite auf, mit der es die Falte 31 beidseits so weit umschließt, dass der Formschluss hergestellt und ein Verrutschen oder Verlieren verhindert wird.

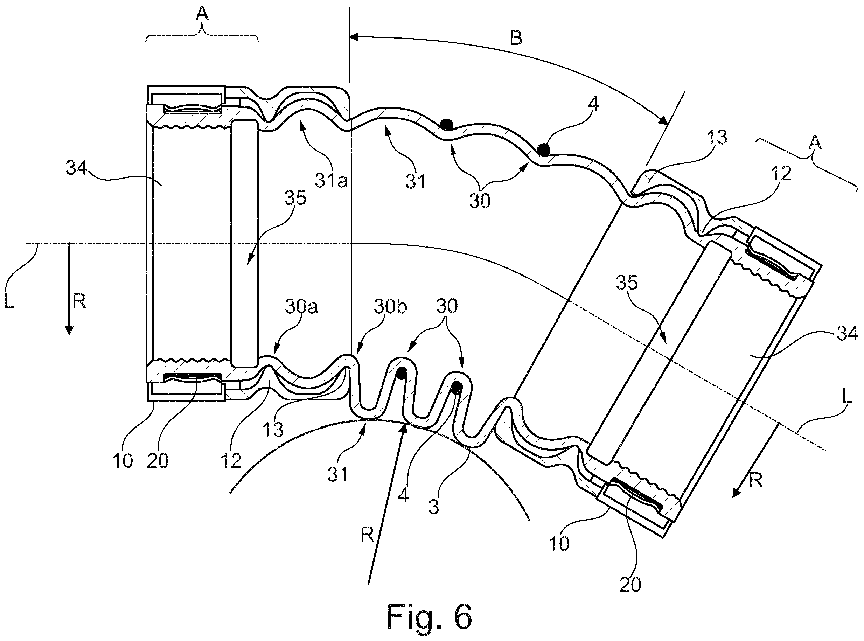

Fig. 6 zeigt eine schematische Schnittdarstellung eines Faltenschlauches 3 mit erfindungsgemäßer Vorrichtung zur Vorpositionierung 1 einer Schlauchschelle 2 gemäß einem vierten Ausführungsbeispiel. Hier ist der Faltenschlauch 3 über seine gesamte Länge, d.h. mit beiden Enden und deren Anschlussbereichen A, dargestellt. In diesem Fall weist jede Vorrichtung zur Vorpositionierung 1 zusätzlich ein zweites Kontaktelement 13 auf, welches sich an das erste Kontaktelement 12 anschließt. Hierdurch wird die Biegsamkeit bis zu dem zweiten Kontaktelement 13 reduziert bzw. ausgeschlossen, so dass sich für den restlichen Biegebereich B des Faltenschlauches 3 ein kleinerer Biegeradius ergibt als ohne das zweite Kontaktelement 13.

Fig. 7a zeigt eine perspektivische schematische Darstellung eines Gehäuses 10 der Fig. 1 gemäß einem fünften Ausführungsbeispiel. Das Gehäuse 10 dieses Ausführungsbeispiels weist zusätzlich zu den bereits beschriebenen Elementen eine Aussparung 15 auf, welche der Gehäuseöffnung 11 diametral gegenüber liegt. Diese erstreckt sich soweit in Umfangsrichtung sowie in Längsrichtung, dass die Aussparung 15 als Sichtfenster 15 wirken kann, durch das optisch der korrekte Sitz des Schellenbandes 20 von außen kontrolliert werden kann.

Ferner weist das Gehäuse 10 eine strukturierte äußere Oberfläche 16 auf, um die Reibung bzw. den Gripp an der Oberfläche bei der Montage zu erhöhen. Dazu weist das Gehäuse 10 in dem fünften Ausführungsbeispiel eine Strukturierung in Form von gekreuzten Rillen auf, die sich rechtwinklig schneiden und sich jeweils gleichermaßen in Umfangsrichtung und Längsrichtung erstrecken. Hierdurch werden zwischen den Rillen rautenförmige Flächen ausgebildet.

Fig. 7b zeigt eine perspektivische schematische Darstellung eines Gehäuses 10 der Fig. 1 gemäß einem sechsten Ausführungsbeispiel. Dieses Ausführungsbeispiel unterscheidet sich lediglich dadurch von dem fünften Ausführungsbeispiel der Fig. 7a, dass die Strukturierung der äußeren Oberfläche 16 hier durch in Umfangsrichtung verlaufende Rillen ausgeführt ist.

### Bezugszeichenliste

(Teil der Beschreibung)
- A: Anschlussbereich des Faltenschlauchs 3
- B: Biegebereich des Faltenschlauchs 3
- L: Längsachse
- R: radiale Richtung
- X: Ausschnitt der Figur 1
- Y: Ausschnitt der Figur 2
- 1: Vorrichtung zur Vorpositionierung einer Schlauchschelle 2
- 10: Gehäuse, Schellenumhausung
- 11: Gehäuseöffnung
- 12: erstes Kontaktelement, erster integrierter Druckring
- 13: zweites Kontaktelement, zweiter integrierter Druckring
- 14: Aufnahme eines Schellenbands 20 der Vorrichtung zur Vorpositionierung 1
- 15: Aussparung des Gehäuses 10, Sichtfenster
- 16: strukturierte äußere Oberfläche des Gehäuses 10
- 2: Schlauchschelle
- 20: Schellenband
- 21: Spannmechanismus
- 3: Faltenschlauch
- 30: weitere Einschnürungen jenseits der zweiten Einschnürung 30b
- 30a: erste Einschnürung
- 30b: zweite Einschnürung
- 31: weiteren Falten jenseits der ersten Falte 31a
- 31a: erste Falte
- 32: Aufnahme eines Schellenbands 20 des Faltenschlauches 3
- 33: Ränder der Schellenbandaufnahme 32
- 34: Aufnahme eines Stutzens oder dergleichen
- 35: Aufnahme eines Dichtelements
- 4: Druckring

## Patentansprüche

1. Schlauchanordnung, mit
einem Faltenschlauch (3),
einer Schlauchschelle (2), und
einer Vorrichtung zur Vorpositionierung (1) der Schlauchschelle (2) auf dem Faltenschlauch (3) mit einem ersten Kontaktelement (12), welches in eine erste Einschnürung (30a) des Faltenschlauches (3) eingreift und/oder auf eine erste Falte (31a) des Faltenschlauches (3) aufgreift,
**gekennzeichnet dadurch, dass**
die Vorrichtung zur Vorpositionierung (1) ferner ein Gehäuse (10) aufweist, welches einen Anschlussbereich (A) des Faltenschlauchs (3) in Umfangsrichtung zumindest abschnittsweise, vorzugsweise vollständig, umgibt und von dem sich das erste Kontaktelement (12) in Längsrichtung (L) von dem Anschlussbereich (A) weg erstreckt,
wobei das Gehäuse (10) eine Öffnung (11) zur Aufnahme eines Spannmechanismus (21) der Schlauchschelle (2) aufweist.

2. Schlauchanordnung nach Anspruch 1, ferner mit
einem zweiten Kontaktelement (13), welches sich von dem ersten Kontaktelement (12) erstreckt und welches ausgebildet ist, in eine zweite Einschnürung (30b) des Faltenschlauches (3) einzugreifen und/oder auf eine zweite Falte (31b) des Faltenschlauches (3) aufzugreifen.

3. Schlauchanordnung nach einem der vorherigen Ansprüche,
wobei das Gehäuse (10) eine in Umfangsrichtung verlaufende Aufnahme (14) eines Schellenbands (20) der Schlauchschelle (2) aufweist.

4. Schlauchanordnung nach einem der vorherigen Ansprüche,
wobei das Gehäuse (10) eine Mehrzahl von radialen Durchgängen aufweist.

5. Schlauchanordnung nach einem der vorherigen Ansprüche,
wobei das Gehäuse (10) eine Aussparung (15) aufweist, welche vorzugsweise der Öffnung (11) im Wesentlichen gegenüberliegend angeordnet ist, und/oder wobei das Gehäuse (10) eine strukturierte äußere Oberfläche (16) aufweist.

6. Schlauchanordnung nach einem der vorherigen Ansprüche,
wobei der Faltenschlauch (3) eine in Umfangsrichtung verlaufende Aufnahme (32) eines Schellenbands (20) der Schlauchschelle (2) aufweist.

7. Schlauchanordnung nach einem der vorherigen Ansprüche,
wobei der Faltenschlauch (3) wenigstens eine weitere Einschnürung (30) mit einem Druckring (4) aufweist.

## Claims

1. Hose arrangement, having
a corrugated hose (3),
a hose clip (2), and
a device for pre-positioning (1) the hose clip (2) on the corrugated hose (3), said device having a first contact element (12) which engages into a first narrowed portion (30a) of the corrugated hose (3) and/or engages onto a first fold (31a) of the corrugated hose (3),
**characterized in that**
the device for pre-positioning (1) furthermore has a housing (10) which at least sectionally, preferably completely, surrounds a connection region (A) of the corrugated hose (3) in a circumferential direction and from which the first contact element (12) extends away from the connection region (A) in a longitudinal direction (L),
wherein the housing (10) has an opening (11) for receiving a clamping mechanism (21) of the hose clip (2) .

2. Hose arrangement according to Claim 1, furthermore having
a second contact element (13) which extends from the first contact element (12) and is designed to engage into a second narrowed portion (30b) of the corrugated hose (3) and/or to engage onto a second fold (31b) of the corrugated hose (3).

3. Hose arrangement according to either of the preceding claims,
wherein the housing (10) has a receiving part (14), extending in a circumferential direction, of a clip band (20) of the hose clip (2).

4. Hose arrangement according to one of the preceding claims,
wherein the housing (10) has a plurality of radial passages.

5. Hose arrangement according to one of the preceding claims,
wherein the housing (10) has a cutout (15) which is preferably arranged substantially opposite the opening (11), and/or wherein the housing (10) has a structured outer surface (16).

6. Hose arrangement according to one of the preceding claims,
wherein the corrugated hose (3) has a receiving part (32), extending in a circumferential direction, for a clip band (20) of the hose clip (2).

7. Hose arrangement according to one of the preceding claims,
wherein the corrugated hose (3) has at least one further narrowed portion (30) having a pressure ring (4) .

## Revendications

1. Agencement de tube, comprenant :
un tube à soufflets (3),
un collier de serrage (2), et
un dispositif pour le pré-positionnement (1) du collier de serrage (2) sur le tube à soufflets (3) comprenant un premier élément de contact (12), qui entre en prise dans un premier étranglement (30a) du tube à soufflets (3) et/ou entre en prise sur un premier soufflet (31a) du tube à soufflets (3),
**caractérisé en ce que**
le dispositif pour le pré-positionnement (1) comprend en outre un boîtier (10), qui entoure au moins en sections, de préférence en totalité, une zone de raccordement (A) du tube à soufflets (3) dans la direction périphérique, et à partir duquel le premier élément de contact (12) s'étend dans la direction longitudinale (L) à partir de la zone de raccordement (A),
le boîtier (10) comprenant une ouverture (11) pour la réception d'un mécanisme de tension (21) du collier de serrage (2).

2. Agencement de tube selon la revendication 1, comprenant en outre
un deuxième élément de contact (13), qui s'étend à partir du premier élément de contact (12) et qui est configuré pour entrer en prise dans un deuxième étranglement (30b) du tube à soufflets (3) et/ou pour entrer en prise sur un deuxième soufflet (31b) du tube à soufflets (3).

3. Agencement de tube selon l'une quelconque des revendications précédentes, dans lequel le boîtier (10) comprend un logement (14), disposé dans la direction périphérique, d'une bande de collier (20) du collier de serrage (2).

4. Agencement de tube selon l'une quelconque des revendications précédentes, dans lequel le boîtier (10) comprend une pluralité de passages radiaux.

5. Agencement de tube selon l'une quelconque des revendications précédentes, dans lequel le boîtier (10) comprend un évidement (15), qui est de préférence agencé essentiellement à l'opposé de l'ouverture (11), et/ou dans lequel le boîtier (10) comprend une surface extérieure structurée (16).

6. Agencement de tube selon l'une quelconque des revendications précédentes, dans lequel le tube à soufflets (3) comprend un logement (32), disposé dans la direction périphérique, d'une bande de collier (20) du collier de serrage (2).

7. Agencement de tube selon l'une quelconque des revendications précédentes, dans lequel le tube à soufflets (3) comprend au moins un étranglement supplémentaire (30) avec une bague de pression (4).
